# EUROPÄISCHE PATENTSCHRIFT

(11) **EP 2 093 012 B1**
(45) Veröffentlichungstag und Bekanntmachung des Hinweises auf die Patenterteilung: **21.12.2011**
(21) Anmeldenummer: 09152591.5
(22) Anmeldetag: 11.02.2009
(51) Int. Cl.: B23P 15/00, B23C 3/18, F01D 5/34

(54) **Verfahren zur Annulusbearbeitung eines Gasturbinenrotors mit integral angeformten Schaufeln**
Method for machining the annulus of a gas-turbine rotor provided with integrally formed blades
Méthode pour l'usinage d'un anneau d'un rotor d'une turbine à gaz avec des aubes integrées

(30) Priorität: 20.02.2008 DE 102008010252
(43) Veröffentlichungstag der Anmeldung: 26.08.2009
(73) Patentinhaber: Rolls-Royce Deutschland Ltd & Co KG, 15827 Blankenfelde-Mahlow (DE)
(72) Erfinder: Kappmeyer, Gregor, 61352, Bad Homburg (DE); Hollmann, Jan, 50733, Köln (DE)

(56) Entgegenhaltungen:
- EP-A- 0 992 310
- EP-A1- 1 627 706
- DE-C- 317 586
- FR-A- 2 635 478
- JP-A- 2001 328 019
- KR-A- 20040 091 818
- US-A- 2 585 973

## Beschreibung

Die Erfindung betrifft ein Verfahren zur Annulusbearbeitung bei einem Gasturbinenrotor mit integral ausgebildeten Schaufeln.

Gasturbinenrotoren und insbesondere die Rotoren der Kompressoren von Gasturbinentriebwerken werden unter dem Aspekt der Zuverlässigkeit, Gewichtseinsparung, Leistungssteigerung und Lebensdauer mit einer am ringförmigen Außenumfang einer Scheibe integral ausgebildeten Beschaufelung ausgeführt. Derartige Bauteile werden als Blisks bezeichnet, wobei der Begriff Blisk eine Kurzform des englischsprachigen Ausdrucks "blade integrated disk" ist. Die Herstellung von Blisks erfolgt bekanntermaßen durch Verschweißen, insbesondere Reibschweißen, separat gefertigter Schaufeln mit der Umfangsringfläche der vorzugsweise geschmiedeten Scheibe oder durch einen von der Außenringfläche der Scheibe ausgehenden Materialabtrag mittels spangebender oder chemischer Verfahren. Nach dem Ausformen der Schaufeln mit den bekannten Materialabtragsverfahren erfolgt eine Feinbearbeitung der Schaufelflächen und -kanten sowie des zwischen den Schaufeln nach dem Materialabtrag verbliebenen, als Annulus bezeichneten Bodens. Aufgrund des geringen Abstandes zwischen den benachbarten Schaufeln und der komplizierten und zudem unterschiedlichen Wölbung und Verdrehung der Schaufeln auf der Druckseite und der Saugseite werden der von den Schaufelspitzen weit entfernte Annulus und der Übergangsbereich (Fillet) zwischen Annulus und den Schaufelseitenflächen mit einem eine ballig ausgebildete Spitze aufweisenden Kopierfräser bearbeitet. Der auch als "ball nose cutter" bezeichnete Kopierfräser kann in dem zwischen zwei benachbarten Schaufeln gebildeten Spalt jeweils so angestellt werden, dass die Seitenfläche des Kopierfräsers nicht mit den Seitenflächen der Schaufelblätter kollidiert. Die Bearbeitung des Annulus- und des Filletbereichs mit dem Kopierfräser, dessen ballige Spitze in einer Vielzahl paralleler Bahnen über den Annulus geführt werden muss, ist zum einen sehr zeitaufwendig und erzeugt zum anderen aneinandergereihte sichelförmige Bearbeitungsbahnen auf der Annulusoberfläche mit hoher Rauhigkeit, so dass die Blisk bezüglich der aerodynamischen Eigenschaften hohen Anforderungen nicht gerecht wird.

Ein Verfahren zur Herstellung eines integral beschaufelten Rotors, bei dem die am Scheibenumfang ausgebildeten Schaufeln durch Fräsen aus dem vollen Material ausgeformt werden, ist in der EP 0 992 310 offenbart. Die DE 317 586 C beschreibt ein Verfahren zum Fräsen von Dampfturbinenschaufeln, bei dem die konkave Schaufelwölbung aus einem vollen Schaufelstab mittels eines Fräsers erzeugt wird, der einen stirnseitig ebenen Schneidenbereich aufweist und von der Schaufelspitze zum chaufelfuß parallel zur Schaufelmittelachse bewegt wird.

Die EP1627706, die dem nächtliegenden stand der Technik entspricht, beschreibt ein Verfahren zur Annulusbearbeitung bei einem Gasturbinenrotor mit integral ausgebildeten Schaufeln mit einem die gegenüberliegenden Innenflächen benachbarter Schauteln nicht Kontaktierenden Schleifwerkzeug und die US 2585 973 offenbart ein Verfahren gemäß der Merkmale des Oberbegriffs des Anspruchs 1.

Der Erfindung liegt die Aufgabe zugrunde, ein Verfahren zur Fertigbearbeitung des zwischen jeweils zwei Schaufeln einer Blisk vorhandenen Annulus so auszubilden, dass die Bearbeitungszeit und der Werkzeugverschleiß verringert werden und eine ebene Annulusfläche mit geringer Rauhigkeit, die hohen aerodynamischen Anforderungen genügt wird, erzeugt wird.

Erfindungsgemäß wird die Aufgabe mit einem Verfahren gemäß den Merkmalen des Patentanspruchs 1 gelöst. Bei einem Verfahren zur Annulusbearbeitung eines integral beschaufelten Rotors besteht der Grundgedanke der Erfindung darin, dass der Materialabtrag am Annulus auf einem breitflächigen ebenen Bearbeitungsweg mit der stirnseitigen Schneidfläche eines im Wesentlichen zylindrischen Fräskopfes erfolgt. Mit dieser Art der Bearbeitung kann mit einer verringerten Anzahl von Bearbeitungswegen, die einander überlappen, eine im Wesentlichen ebene, glatte Annulusoberfläche erzielt werden. Der Zeitaufwand für die Annulusbearbeitung wird verringert und der Werkzeugverschleiß reduziert. Der Oberflächenzustand des Annulus kann außerdem aufgrund der verbesserten Bedingungen für die Spanentfernung verbessert werden, so dass der integral beschaufelte Rotor hohen Anforderungen hinsichtlich der aerodynamischen Eigenschaften gerecht wird.

Die maximale Bearbeitungsbreite ist kleiner als der Geringste Abstand zwischen den gegenüberliegenden Fillets der Schaufeln und kann größer als die Hälfte des geringsten Filletabstandes sein, so dass schon auf zwei einander überlappenden Bearbeitungswegen der Annulus und der jeweilige Übergangsbereich(Fillet) zur Schaufelseitenfläche vollständig spanend bearbeitet werden können.

Ein Fräswerkzeug zur Durchführung des Verfahrens weist einen an einem Werkzeugschaft vorgesehenen, im Wesentlichen zylindrischen Fräskopf mit einem ebenen stirnseitigen Schneidbereich und entsprechend geraden Schneiden auf. Der Durchmesser des Werkzeugschaftes ist in dem während der Bearbeitung zwischen den Schaufeln liegenden Bereich derart reduziert, dass er während der in einer gleichbleibenden Position durchgeführten Bearbeitung nicht mit den Schaufelflächen kollidiert.

Die umlaufende Seitenfläche des Fräskopfes ist konvex gekrümmt und weist entsprechend gekrümmte Schneiden auf. Die gekrümmte Seitenfläche dient zur Vermeidung scharfer Kanten.

Der Durchmesser des Fräskopfes ist kleiner als der geringste Abstand zwischen den gegenüberliegenden Fillets und vorzugsweise größer als die Hälfte des geringsten AbStandes zwischen den beiden Fillets.

Ein Ausführungsbeispiel der Erfindung wird anhand der Zeichnung näher erläutert. Es zeigen:
- Fig. 1: eine Teilansicht einer Blisk mit einem zwischen zwei integral mit der Scheibe verbundenen Schau- feln angeordnetem). Fräswerkzeug;
- Fig. 2: eine Seitenansicht des Fräswerkzeugs ;
- Fig. 3: eine vergrößerte Darstellung nach Fig. 2 im Bereich des Fräskopfes; und

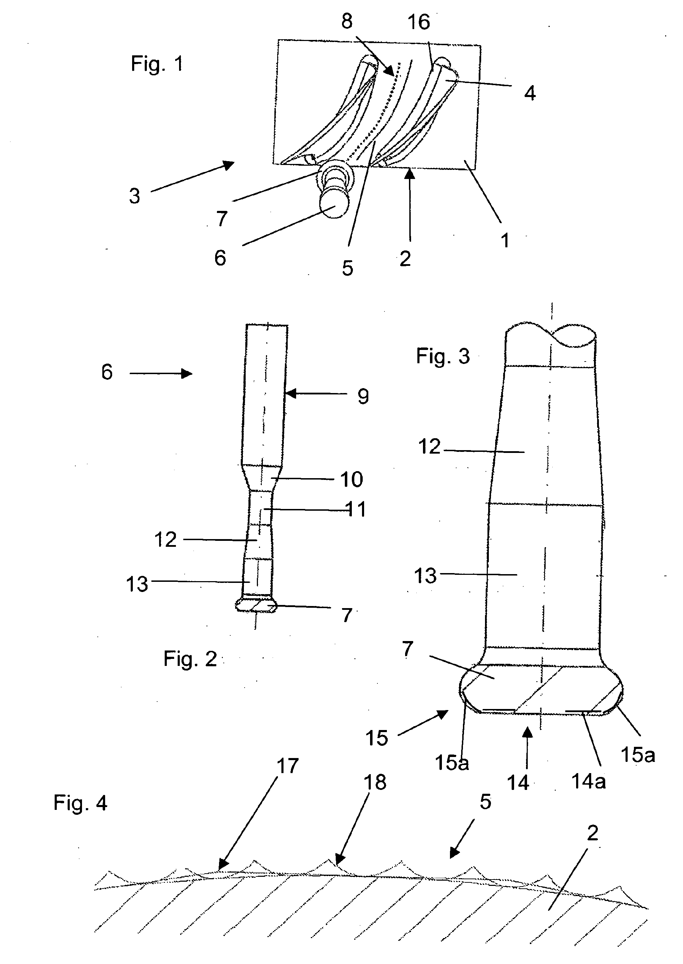

- Fig. 3: eine stark vergrößerte Darstellung des mit dem erfindungsgemäßen und dem herkömmlichen Bearbei- tungsverfahren erzielten Oberflächenprofils des Annulus.

wie Fig. 1 zeigt, sind an der kreisförmig verlaufenden Außenumfangsfläche 1 der Scheibe 2 einer Blisk 3 unterschiedlich gekrümmte und in sich verdrehte Schaufeln 4 integral angeformt. Der Einfachheit halber ist hier nur eine Teilansicht mit zwei Schaufeln 4 dargestellt. Der zwischen den Schaufeln 4 verbleibende Teil der Außenumfangsfläche der Scheibe 2 ist der Annulus 5, der zur Erzielung seiner endgültigen Kontur in dem ebenen Bereich und dem Übergangsbereich 16 (Fillet) zu den Schaufelflächen auf zwei Bearbeitungswegen 8 (in der vorliegenden Ausführungsform) mit einem Fräswerkzeug 5 mit stirnseitig eben (gerade) und an der gekrümmtem Seitenfläche nach außen gerundet verlaufenden Schneiden am Fräskopf 7 bearbeitet wird. Der während der spanenden Bearbeitung rotierende und entlang der Bearbeitungswege 8 bewegbare Fräskopf 7 ist mit einen an ein Antriebsmittel (nicht dargestellt) angeschlossenen Werkzeugschaft 9 verbunden. Der Durchmesser des Werkzeugschaftes 9 ist in einem zwischen den beiden gegenüberliegenden gewölbten und verdrehten Schaufeln 4 liegenden Bereich derart verjüngt ausgebildet, dass er bei einer auf dem jeweiligen Bearbeitungsweg 8 senkrechten Positionierung zum Annulus 5 nicht mit den gegenüberliegenden Seitenflächen der Schaufeln 4 kollidiert. In der vorliegenden Ausführungsform hat der werkzeugschaft 9 in dem Bereich mit verringertem Durchmesser zunächst einen konisch verjüngten Abschnitt 10, an den sich ein gerader Abschnitt 11, danach ein konisch erweiterter Abschnitt 12 und dann bis zum Fräskopf 7 hin wieder ein gerader Abschnitt 13 anschließen. Der Fräskopf 7 hat an dem ebenen Schneidbereich 14 (Stirnfläche) gerade Schneiden 14a und an der torusförmig umlaufenden seitlichen Schneidfläche 1.5 entsprechend gewölbte Schneiden 15a, deren Wölbung der Rundung im Fillet 16 entsprechen kann. Der maximale Durchmesser des Fräskopfes 7 ist geringfügig kleiner als der kleinste Abstand zwischen den Schaufeln 4 im Bereich des Fillets 16, aber größer als die Hälfte des maximalen Abstands zwischen den Schaufeln 4 im Bereich des Fillets 16. Der Anulus 5 und das Fillet 16 können somit auf lediglich zwei - sich mittig überlappenden - Bearbeitungswegen 8 mit geringem Zeitaufwand fertig bearbeitet werden. Das dabei erzielte Oberflächenprofil 17 ist - wie Fig. 4 zeigt - gegenüber einer mit dem herkömmlichen Verfahren und Werkzeug erzielten Oberflächenstruktur 18 im Wesentlichen eben und glatt. Der Oberflächenzustand kann zudem aufgrund der verbesserten Bedingungen für die Spanentfernung verbessert werden. Aufgrund der deutlich verringerten Anzahl der Bearbeitungswege wird der Werkzeugverschleiß deutlich reduziert.

### Bezugszeichenliste

- 1: Außenumfangsfläche
- 2: Scheibe
- 3: Blisk
- 4: Schaufel
- 5: Annulus
- 6: Fräswerkzeug
- 7: Fräskopf
- 8: Bearbeitungsweg
- 9: Werkzeugschaft
- 10: Konisch verj. Abschnitt
- 11: gerader Abschnitt.
- 12: konisch erw. Abschnitt
- 13: gerader Abschnitt
- 14: eberer stirnseitiger Schneidbereich 14a gerade Schneiden
- 15: umlaufender gewölbter seitl. Schneidbereich
- 15a: gewölbte Schneiden 16 Fillet (Übergangsbereich)
- 17: ebenes Oberflächenprofil
- 18: herkömmt. Oberflächenstruktur

## Patentansprüche

1. Verfahren zur Annulusbearbeitung bei einem Gasturbinenrotor mit integral ausgebildeten Schaufeln mit einem die gegenüberliegenden Innenflächen benachbarter Schaufeln nicht kontaktierenden Fräswerkzeug, **gekennzeichnet durch** einen bei dem jeweiligen Bearbeitungsweg (8) des Fräswerkzeugs breitflächigen, ebenen Materialabtrag mit dem ebenen stirnseitigen und parallel zur Annulusoberfläche verfahrbaren Schneidbereich (14) eines Fräskopfes (7), wobei der Werkzeugschaft (9) entsprechend dem zwischen den gekrümmten und in sich verdrehten Schaufeln über die Schaufellänge vorhandenen Abstand einen derart konisch verringerten Durchmesser aufweist, dass der während der Bearbeitung gleichbleibend ausgerichtete Werkzeugschaft (9) nicht mit den Schaufeln (4) kollidiert, und wobei die Breite eines Bearbeitungsweges (8) des Fräskopfes größer als die Hälfte des geringsten Abstandes der Schaufeln in Höhe des Annulus und kleiner als dieser geringste Abstand ist und sich die Bearbeitungswege überlappen.

## Claims

1. Method for machining the annulus of a gas-turbine rotor provided with integrally formed-on blades by means of a cutting tool which does not contact the opposite inner surfaces of adjacent blades, **characterized by** a wide, even material removal on the respective machining path (8) of the cutting tool using the plane front-side cutting-area (14) of a cutter head (7), which is movable parallelly to the annulus surface, with the diameter of the tool shank (9) according to the distance existing between the curved and twisted blades over the blade length being conically constricted such that the tool shank (9), which is invariably positioned during machining, is prevented from colliding with the blades (4), with the width of a machining path (8) of the cutter head being more than half the minimum distance between the blades at annulus level and less than this minimum distance, and with the machining paths overlapping each other.

## Revendications

1. Procédé destiné à l'usinage du canal annulaire sur le rotor d'une turbine à gaz avec aubes intégralement façonnées, réalisé à l'aide d'un outil de fraisage n'entrant pas en contact avec les surfaces intérieures opposées d'aubes voisines, **caractérisé par** un enlèvement de matière large et lisse sur la voie d'usinage (8) respective de l'outil de fraisage au moyen de la zone de coupe frontale (14) d'une tête de fraisage (7), ladite zone de coupe étant plane et mobile parallèlement à la surface du canal annulaire, sachant que la tige d'outil (9) présente un diamètre diminuant coniquement de manière à correspondre à l'intervalle existant sur la longueur des aubes entre les aubes incurvées et tordues, de sorte que pendant l'usinage, la tige d'outil (9) invariablement orientée ne heurte pas les aubes (4), et sachant que la largeur d'une voie d'usinage (8) de la tête de fraisage est supérieure à la moitié de la plus faible distance entre les aubes au niveau du canal annulaire et inférieure à cette plus faible distance, et que les voies d'usinage se chevauchent.
